(19) Europäisches Patentamt
European Patent Office
Office européen des brevets

(11) **EP 1 980 585 B1**

(12) **EUROPEAN PATENT SPECIFICATION**

(45) Date of publication and mention
of the grant of the patent:
**28.06.2017 Bulletin 2017/26**

(51) Int Cl.:
**C08G 69/26** *(2006.01)*          **C08G 69/28** *(2006.01)*
**C08G 69/30** *(2006.01)*          **C08F 2/02** *(2006.01)*
**B01J 19/00** *(2006.01)*

(21) Application number: **08154233.4**

(22) Date of filing: **09.04.2008**

(54) **Production method of polyamide**

Herstellungsverfahren für Polyamid

Procédé de production de polyamide

(84) Designated Contracting States:
**BE DE FR GB IT**

(30) Priority: **11.04.2007   JP 2007103481**

(43) Date of publication of application:
**15.10.2008   Bulletin 2008/42**

(73) Proprietor: **Mitsubishi Gas Chemical Company, Inc.**
**Tokyo 100-8324 (JP)**

(72) Inventors:
• **Kurose, Hideyuki**
**Niigata-shi, Niigata (JP)**
• **Tanaka, Kazumi**
**Niigata-shi, Niigata (JP)**
• **Shinohara, Katsumi**
**Niigata-shi, Niigata (JP)**
• **Kikuchi, Minoru**
**Niigata-shi, Niigata (JP)**

(74) Representative: **Gille Hrabal**
**Brucknerstrasse 20**
**40593 Düsseldorf (DE)**

(56) References cited:
**GB-A- 1 129 074          US-A- 3 376 270**
**US-A- 4 018 746          US-A- 5 175 238**
**US-A1- 2002 132 964      US-A1- 2003 091 823**

• **DATABASE WPI Week 200311 Thomson Scientific, London, GB; AN 2003-114571 XP002523499 -& JP 2002 220464 A (MITSUBISHI GAS CHEM CO INC) 9 August 2002 (2002-08-09)**
• **DATABASE WPI Week 200310 Thomson Scientific, London, GB; AN 2003-106173 XP002523500 -& JP 2002 220465 A (MITSUBISHI GAS CHEM CO INC) 9 August 2002 (2002-08-09)**
• **DATABASE WPI Week 200453 Thomson Scientific, London, GB; AN 2004-547689 XP002523501 -& JP 2004 204027 A (TOYOBO KK) 22 July 2004 (2004-07-22)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a method of producing polyamide suitable for the production of molding materials, bottles, sheets, films and fibers. More particularly, the present invention relates to a repeated batch production of polyamide by the direct melt polymerization of a dicarboxylic acid component and a diamine component containing 70 mol % or more of xylylenediamine in the absence of solvent.

2. Description of the Prior Art

Generally, polyamide has been widely produced by the polycondensation in which an aqueous solution of nylon salt of a dicarboxylic acid component and a diamine component is subjected to the melt polymerization under pressure.
As a method of omitting the aqueous solution of nylon salt, JP 57-200420A discloses a direct melt polymerization of a dicarboxylic acid component and a diamine component in the absence of solvent. In this method, the diamine component is added while maintaining the reaction system in a molten state by heating the reaction system to temperatures higher than the melting point of the polyamide being produced. This method is economically advantageous, because the removal of water (water from the aqueous solution of nylon salt) and solvent by distillation is not needed.
It is advantageous for this method that the boiling point of the diamine component is higher than that of the polyamide being produced. If the boiling point is lower than that of the polyamide being produced, the diamine added is immediately evaporated off and the melt polymerization does not proceed efficiently. The boiling point of xylylenediamine is about 274 °C under normal pressure and higher than that of the diamine generally used in the production of polyamide, for example, as compared with the boiling point (199 to 205 °C) of hexamethylenediamine. Therefore, the direct melt polymerization of the dicarboxylic acid component and the diamine component in the absence of solvent is advantageous when the diamine component is xylylenediamine.
In the production of polyamide using a batch reactor, after discharging the produced polyamide, a part thereof inevitably remains in the reactor, because the molten polyamide is generally highly viscous and the polyamide adhered to the inner wall of the reactor and stirring blade is difficult to be completely discharged. The amount of remaining polyamide can be reduced by expending much time for discharging or washing the reactor by solvent after every batch production, however, the production efficiency is lowered. Therefore, generally, the discharging is stopped when the amount of remaining polyamide is reduced to an acceptable level and the next batch production is started.
In the industrial production using a large reactor, since the reactor is still in high temperatures after the production, the remaining polyamide is subject to a heat history and thermally degraded. By the thermal degradation, a defective matter called gel which is insoluble and infusible with polyamide is formed. The gels cause a defect called fisheyes (spot-like small blemish) in films of polyamide. The increased number of fisheyes unfavorably reduces the quality of products.
Polyamide containing xylylenediamine units tends to easily form gels, as compared with other types of polyamide such as nylon 66 and nylon 6. This may be because of the crosslinking reaction at the benzyl position of xylylene structure because the hydrogen at the benzyl position is easily pulled out, in addition to the crosslinking reaction responsible for the terminal groups which is generally considered as the cause for the gelation of polyamide. The gels of polyamide generally have crosslinking points (Schiff's base) which are easily broken by water. It has been suggested that the gels of polyamide having m-xylylenediamine units have the crosslinking points in a smaller amount as compared with nylon 66 (Tsukamoto et al., "Kobunshi Kagaku," July, 1973, vol. 30, 339, p. 419). Therefore, it has been expected that the gels of polyamide having m-xylylenediamine units are difficult to be decomposed by water vapor.
Thus, in the production of polyamide by the direct melt polymerization of the dicarboxylic acid component and the diamine component containing xylylenediamine in the absence of solvent, the gels in the remaining polyamide from the previous batch production enter into the polyamide produced in the next batch production, to increase the number of fisheyes in molded articles. Therefore, a method of reducing the influence of gels in the remaining polyamide has been needed.
JP 9-95532A discloses that polyamide having xylylenediamine units with little gels and yellowing can be produced by the polymerization at a polymerization temperature of 170 to 220 °C under the conditions that a product (P $\times$ t) of the water vapor pressure P (kgf/cm$^2$G) and the polymerization time t (h) and the polymerization temperature T (°C) satisfy the specific relationship. However, although the prevention of the gel formation and yellowing during the polymerization is considered, JP 9-95532A considers nothing about reducing the influence of the gels in the remaining polyamide from the previous batch production.
JP 2001-329062A discloses a method of producing polyamide by the polymerization of a dicarboxylic acid component and a diamine component containing 80 mol % of a diamine having the boiling point higher than the melting point of the polyamide by 5 °C or more, in which after the addition of the diamine to the molten dicarboxylic acid, the reactor is maintained at atmospheric pressure or higher at least for 5 min. Although the proposed method is suitable for precisely controlling the mole balance between the dicarboxylic acid component and the diamine component, JP 2001-329062A considers nothing about reducing the influence of the gels in the remaining polyamide from the previous batch production and nothing about continuing the melt polymerization while introducing water vapor.

US 2002/0132964 A1 is related to a process for the preparation of a polyamide from a dicarboxylic acid and a diamine. More in particular, the document is related to a process for the preparation of a polyamide in which the diamine is added to molten dicarboxylic acid. This is emphasized in section [0002] of the document and the disadvantage of working with aqueous solutions of nylon salts is described in section [0005]. The document describes the advantages and disadvantages of the two methods of batch-wise polymerization and continuous polymerization and refers to the problems which occurred in combining the batch-wise preparation of polyamide with the subsequent continuous pelletization. The process which is described is directed to providing a solution for the problem of the difficulties which are encountered in the transfer from a first batch-wise production phase to a second continuous phase. The solution according to the document is the maintenance of the product which is prepared in the first phase of the process "at a predetermined pressure by saturated steam". The document provides different aspects which are characterized by this feature of the maintenance under pressure with steam. The principle of the effect of the addition of steam is explained in the sections [0029] and [0030]. Water shall be present in such a concentration that the polymer which is obtained in the first stage does not change, neither through a continued polymerization, nor through equally unwanted depolymerization. In the practice of the process of US 2002/0132964 A1 this means that a polymer which is obtained in the first stage of the process and which has achieved a polymerization degree which is expressed by a relative viscosity of between 1.4 and 2.7 does not change the polymerization degree and the relative viscosity stays at the same level.

SUMMARY OF THE INVENTION

An object of the present invention is to provide a repeated batch production method of polyamide, which, even when polyamide from the previous batch production remains, reduces the influence of the gels in the remaining polyamide, thereby reducing fisheyes in molded articles.

As a result of extensive research in view of achieving the object, the inventors have found that the adverse effect of the gels is reduced by continuing the melt polymerization at a predetermined temperature for a predetermined period of time after pressurizing the vapor phase in the batch reactor by introducing water vapor. It has been further found that films and other molded articles of the polyamide thus produced contain little fisheyes. The present invention is based on these findings.

Thus, the present invention relates to a method of producing polyamide by a direct melt polymerization of a dicarboxylic acid component and a diamine component in the absence of a solvent in a repeated batch manner, which comprises:

(1) a step of feeding a solid or molten dicarboxylic acid component into a batch reactor and keeping a molten state of the dicarboxylic acid component therein;
(2) a step of adding the diamine component comprising 70 mol% or more of xylylenediamine continuously or intermittently to the dicarboxylic acid component kept in the molten state in the batch reactor;
(3) a step of introducing water vapor into the batch reactor after completing the addition of the diamine component; and
(4) a step of maintaining a pressure of a vapor phase in the batch reactor at a pressure higher than 0.1 MPaG, and continuing the melt polymerization after pressurizing the vapor phase in the batch reactor by introducing water vapor, at a temperature equal to or higher than a melting point of polyamide being produced for at least 10 minutes,

wherein the dicarboxylic acid component for the next batch production is supplied to the batch reactor in the presence of a remaining polyamide that is produced in a previous batch production, and
wherein the amount of the remaining polyamide is 0.3 % by weight or more of the total amount of the remaining polyamide and the theoretical yield of polyamide calculated from amounts of a dicarboxylic acid component and a diamine component which are supplied to the batch reactor for the next batch production. According to the present invention, the polyamide hardly affected by gels is produced. Particularly, even when polyamide from the previous batch production remains, the adverse effect of the gels in the remaining polyamide on molded articles is reduced. Therefore, the fisheyes in molded articles are reduced.

DETAILED DESCRIPTION OF THE INVENTION

In the present invention, a dicarboxylic acid component is freshly fed into a batch reactor in the presence of polyamide remaining after the previous polymerization of a dicarboxylic acid component and a diamine component containing xylylenediamine. Then, a diamine component containing 70 mol % or more (inclusive of 100 mol %) of xylylenediamine is freshly added to the batch reactor to initiate the melt polymerization. Although the main reaction is the reaction between the dicarboxylic acid component and the diamine component both being freshly fed, the remaining polyamide may react with the fresh dicarboxylic acid component and/or the fresh diamine component, or may dissolve therein.

Examples of the dicarboxylic acid component include adipic acid, succinic acid, sebacic acid, dodecadioic acid, isophthalic acid, terephthalic acid, and naphthalenedicarboxylic acid, with adipic acid being preferably used. These dicarboxylic acids may be used alone or in combination of two or more. The dicarboxylic acid component preferably contains 70 mol % or more (inclusive of 100 mol %) of adipic acid.

Examples of xylylenediamine include m-xylylenediamine, p-xylylenediamine and o-xylylenediamine, with m-xylylenediamine being preferably used. These may be used alone or in combination of two or more. The xylylenediamine preferably comprises 70 mol% or more (inclusive of 100 mol %) of m-xylylenediamine. Examples of the diamine component other than xylylenediamine include 1,2-bis(aminomethyl)cyclohexane, 1,3-bis(aminomethyl)cyclohexane, 1,4-bis(aminomethyl)cyclohexane, trimethylenediamine, tetramethylenediamine, pentamethylenediamine, hexamethylenediamine, 1,7-diaminoheptane, 1,8-diaminooctane, 1,9-diaminononane, 1,10-diaminodecane, o-phenylenediamine, m-phenylenediamine, and p-phenylenediamine.

The dicarboxylic acid component and the diamine component each being freshly fed into the batch reactor may be the same as or different from, preferably the same as the dicarboxylic acid component and the diamine component used as the raw material for the remaining polyamide. In the repeated batch production using the same batch reactor, the remaining polyamide may be the polyamide produced in the previous batch production.

Examples of the optional polyamide-forming component other than the diamine component and dicarboxylic acid component include, but not limited to, lactams such as caprolactam, valerolactam, laurolactam, and undecalactam; and aminocarboxylic acids such as 1,1-aminoundecanoic acid and 1,2-aminododecanoic acid.

To prevent the discoloration during the melt polymerization, the melt polymerization may be carried out in the presence of a phosphorus compound such as phosphoric acid, phosphorous acid, hypophosphorous acid, and salts or esters thereof. Examples of salts of phosphoric acid include potassium phosphate, sodium phosphate, calcium phosphate, magnesium phosphate, manganese phosphate, nickel phosphate, and cobalt phosphate. Examples of esters of phosphoric acid include methyl phosphate, ethyl phosphate, isopropyl phosphate, butyl phosphate, hexyl phosphate, isodecyl phosphate, decyl phosphate, stearyl phosphate, and phenyl phosphate. Examples of salts of phosphorous acid include potassium phosphite, sodium phosphite, calcium phosphite, magnesium phosphite, manganese phosphite, nickel phosphite, and cobalt phosphite. Examples of esters of phosphorous acid include methyl phosphite, ethyl phosphite, isopropyl phosphite, butyl phosphite, hexyl phosphite, isodecyl phosphite, decyl phosphite, stearyl phosphite, and phenyl phosphite. Examples of salts of hypophosphorous acid include potassium hypophosphite, sodium hypophosphite, calcium hypophosphite, magnesium hypophosphite, manganese hypophosphite, nickel hypophosphite, and cobalt hypophosphite. These compounds may be used alone or in combination of two or more.

The phosphorus compound may be added to the diamine component or the dicarboxylic acid component before feeding into the batch reactor, or may be added to the reaction system during the melt polymerization, although not limited thereto.

The batch reactor to be used in the present invention is not limited to a special type, and any reactor equipped with a stirring device and suitable for polymerization may be usable. A pressure reactor is preferably used. To prevent the diamine component and the dicarboxylic acid component from escaping out of the reaction system, a reactor equipped with a partial condenser having a temperature-controllable heating surface is preferably used.

Since the diamine component contains 70 mol % or more of xylylenediamine, the polymerization is preferably conducted by the melt polymerization in which the diamine component is continuously or intermittently added to the molten dicarboxylic acid component. To prevent the discoloration due to oxidation, the dicarboxylic acid component is melted preferably in an inert atmosphere such as nitrogen. The dicarboxylic acid component may be melted in the batch reactor or the molten dicarboxylic acid component prepared in a separate melting tank may be fed into the batch reactor. In view of enhancing the reactor efficiency, the dicarboxylic acid component is preferably fed to the batch reactor after being melted in the separate melting tank.

To produce polyamide having a desired mole balance (diamine component rich, dicarboxylic acid component rich and equimolar balance), the mole balance of the charged components may be freely selected. The mole balance is controlled, for example, by weighing the molten dicarboxylic acid together with the melting tank and feeding the molten dicarboxylic acid to the batch reactor, and thereafter, feeding the diamine to the batch reactor while weighing the tank storing the diamine. The mass of the diamine component or the dicarboxylic acid component is suitably weighed by a mass weighing device such as load cell and balance.

The diamine component is added to the molten dicarboxylic acid component which is preferably heated to 160 °C or higher at which the amidation is substantially allowed to proceed. The temperature of the reaction system is preferably set at temperatures where the intermediate oligomer and/or low-molecular polyamide being produced is melted and the whole reaction system is maintained in a uniform and flowable state. The melt polymerization temperature is generally selected from the range of 180 to 290 °C. Specifically, the diamine component is continuously or intermittently added to the molten dicarboxylic acid component under stirring while maintaining the reaction mixture at a predetermined temperature by heating during the addition.

The temperature rising rate of the reaction system varies according to the heat of amidation, the latent heat of water being generated by condensation and the heat supplied. Therefore, the temperature of the reaction mixture when the addition of the diamine component is completed is preferably equal to or higher than the melting point of polyamide and less than the melting point + 35 °C, more preferably less than the melting point + 15 °C, still more preferably less than the melting point + 5 °C. Within the above range, the reaction mixture is kept in a molten state and the addition speed of the diamine component is suitably controllable. Although the remaining polyamide is not necessarily completely molten or dissolved during the addition of the diamine component, it is preferred that the reaction mixture is in a uniform molten state at the completion of the addition.

The water being generated as the polycondensation proceeds is distilled and removed from the reaction system through a partial condenser and a condenser. The vapor of the diamine component escaping from the reaction system together with the generated water, the dicarboxylic acid escaping from the reaction system by sublimation, etc. are separated from water vapor in the partial condenser and returned to the batch reactor. Like a known pressure method using an aqueous solution of nylon salt, the escape of the raw materials, particularly the escape of the diamine component from the reaction system is difficult to prevent in the present invention. Therefore, the batch reactor is preferably equipped with the partial condenser, thereby effectively preventing the escape of the diamine component.

The addition of the diamine component is preferably performed at atmospheric pressure, because the generated water is effectively removed and the melt polymerization is promoted. However, the addition of the diamine component can be performed under pressure of nitrogen or water vapor. In view of removing the generated water effectively, the pressure is preferably 0.9 MPaG or lower.

After completing the addition of the diamine component to the molten dicarboxylic acid component, water vapor is introduced into the batch reactor. Then, the melt polymerization is further continued at temperatures equal to or higher than the melting point of the polyamide being produced for at least 10 min while maintaining the vapor phase of the batch reactor at higher than 0.1 MPaG by keeping the introduction of water vapor. By continuing the melt polymerization under the above conditions, polyamide having little gels and hardly affected by the gels is obtained. Even in the production where the dicarboxylic acid component is fed into the batch reactor containing polyamide, for example polyamide remaining after the previous batch production, and thereafter the melt polymerization is carried out, the gels in the polyamide are decomposed by enough water in the reaction mixture which is generated during the polymerization and derived from the introduced water vapor, thereby obtaining polyamide containing little gels and hardly forming fisheyes. This may be because the gels are decomposed, in addition to the decomposition by water, by the acidic nature of the terminal carboxyl groups which are contained in a relatively large amount in the prepolymer present immediately after the addition of the diamine component.

The effect of the present invention is remarkable in the feature of the process that the amount of polyamide remaining in the batch reactor before the melt polymerization (remaining amount) is 0.3% by weight or more of the amount of polyamide to be produced. The term "amount of polyamide to be produced" referred to herein is the total of the remaining amount and the theoretical yield of polyamide calculated from the amounts of the raw materials to be fed into the batch reactor. If the remaining amount is less than 0.3% by weight, the effect of the present invention is not so remarkable because the adverse effect of a small remaining amount on the quality of products is little. Since the effect of the present invention is obtained even when the content of gels in polyamide is large, the upper limit of the remaining amount is not particularly limited. However, the upper limit is practically 10% by weight or less, because a high power may be needed to start the stirring blades if exceeding 10% by weight. If the remaining amount exceeds 10% by weight, the remaining amount can be reduced to a level not increasing the power of stating the stirring blades in a short time by discharging the remaining polyamide again before the production.

The vapor phase pressure should be maintained at higher than 0.1 MPaG by introducing water vapor. It may be hard to maintain the pressure only with the generated water by polymerization because the amount of the generated water may be reduced as the polymerization progresses. By introducing water vapor, an enough amount of water is fed into the polyamide to promote the decomposition of gels. The use of inert gas such as nitrogen is not preferred because in that case water is not introduced into the polyamide and water is evaporated into the inert gas to reduce the water content in the polyamide.

A pressure of 0.1 MPaG or lower is unfavorable because the gels are decomposed slowly due to a low content of water in the polyamide. The upper limit of the pressure is not specifically limited, and preferably 0.9 MPaG. If exceeding 0.9 MPaG, the molecular weight of polyamide being produced is low and much time is required to obtain polyamide having a sufficiently high molecular weight.

The temperature for continuing the melt polymerization under the above conditions is not limited as long as the reaction mixture is maintained in a molten state, for example, a temperature equal to or higher than the melting point of polyamide being produced. In view of efficiently stirring the reaction mixture, the temperature is preferably 225 °C or higher and more preferably 240 °C or higher. The upper limit is not specifically limited, and preferably 300 °C in view of the decomposing temperature of general polyamide. The time for continuing the melt polymerization is 10 min or more and more preferably 30 min or more. If less than 10 min, the decomposition of gels is insufficient. The upper limit is not specifically limited, but it is recommended to continue the melt polymerization for a relatively shorter period of time in view of efficiency, for example, up to 60 min.

The water vapor is introduced into the batch reactor preferably after being filtered through a metal filter. The pipeline of water vapor is generally made of iron instead of stainless steel. Therefore, even when the feeding line is made of stainless steel, the water vapor is likely to be contaminated with iron rust from other lines. The mesh size is not critical and preferably 50 $\mu$m or less.

To prevent the diamine and the dicarboxylic acid from escaping out of the reaction system, the batch reactor is preferably equipped with a partial condenser. During the step for continuing the melt polymerization under the above conditions, the heating surface of the partial condenser is preferably kept at a temperature equal to or lower than the saturated water vapor temperature at the pressure of the reaction system. If equal to or lower than the saturated water vapor temperature, a sufficient amount of water is refluxed in the partial condenser to effectively wash away the oligomers attached to the partial condenser.

After keeping the vapor phase at higher than 0.1 MPaG for at least 10 min, the batch reactor may be evacuated to remove the water vapor from the vapor phase of the reaction system. The amidation equilibrium shifts to the product side and the degree of polymerization is further increased. Alternatively, the degree of polymerization may be further increased by removing the water vapor by introducing an inert gas into the vapor phase of the batch reactor.

The polyamide produced according to the present invention may be subjected to a solid-state polymerization to allow the polymerization to further proceed. Thus, a polyamide having a higher molecular weight is produced. Alternatively, a polyamide having a higher molecular weight can be produced by allowing the polyamide produced according to the present invention to be further polymerized in a continuous polymerizer in a molten state.

The present invention will be described in more detail with reference to the examples and comparative examples. However it should be noted that the scope of the present invention is not limited thereto.

The method for each analysis is described below.

(1) Terminal amino group concentration

Polyamide in an amount of 0.3 to 0.5 g was accurately weighed, and dissolved in 30 mL of a phenol/ethanol mixed solvent (4:1 by volume) at room temperature under stirring. After the complete dissolution, the polyamide solution was subjected to neutralization titration with a 0.01 mol/L hydrochloric acid to determine the terminal amino group concentration.

(2) Terminal carboxyl group concentration

Polyamide in an amount of 0.3 to 0.5 g was accurately weighed, and dissolved in 30 mL of benzyl alcohol while stirring at 160 to 180°C under a nitrogen flow. After the complete dissolution, the polyamide solution was cooled to 80°C under a nitrogen flow. Then, 10 ml of methanol was added to the solution while stirring, and the solution was subjected to neutralization titration with a 0.01 mol/L aqueous solution of sodium hydroxide to determine the terminal carboxyl group concentration.

(3) Number average molecular weight

The number average molecular weight was calculated from the measured terminal amino group concentration and the terminal carboxyl group concentration according to the following formula:

$$\text{Number Average Molecular Weight} = 2/([\text{NH}_2] + [\text{COOH}])$$

wherein $[\text{NH}_2]$ is the terminal amino group concentration (mol/g) and [COOH] is the terminal carboxyl group concentration (mol/g).

(4) Number of fisheyes

Polyamide was extruded from a 25-mm single screw extruder with T-die at 270 °C, to obtain a non-stretched

film of 50 μm thick and 150 mm wide. The film was visually observed to count the number of fisheyes of 0.05 mm$^2$ or more using the "Dirt Estimation Chart" published by Japan Mint. The number of fisheyes is expressed by the number per 1 m$^2$.

(5) Yellowness index (YI)

Measured on polyamide pellets using ZE-2000 manufactured by Nippon Denshoku Industries Co., Ltd.

EXAMPLE 1

(1) Control of Amount of Remaining Polyamide

In an empty batch reactor 15 kg of adipic acid having a purity of 99.85 wt % was melted. After the molten adipic acid reached 190 °C, 14 kg of m-xylylenediamine (MXDA) having a purity of 99.98 wt % was added dropwise under stirring over 2 hrs at atmospheric pressure. The heating was controlled such that the inner temperature was 245 °C at the completion of adding MXDA. After the addition of MXDA, the polymerization was continued for 30 min at atmospheric pressure. Then, the pressure was reduced to 80 kPaA and the polymerization was continued for 20 min under stirring. The product was granulated by water cooling under pressure of nitrogen, to obtain poly(m-xylylene adipamide) (nylon MXD 6) having a number average molecular weight of 16000. The measured number of fisheyes was 1190 /m$^2$. The produced polyamide was discharged from the batch reactor such that the amount of the remaining polyamide (theoretical yield - discharged amount) was 250 g.

(2) Batch Production in the Presence of Remaining Polyamide

In the batch reactor containing 250 g (1% by weight of the amount of polyamide to be produced) of the remaining polyamide from the previous batch production, 14.7 kg of adipic acid having a purity of 99.85 wt % was melted. After the molten adipic acid reached 190 °C, 13.6 kg of MXDA having a purity of 99.98 wt % was added dropwise over 2 hrs under atmospheric pressure while raising the temperature. The heating was controlled such that the inner temperature was 245 °C at the completion of adding MXDA. After the addition of MXDA, the pressure of the vapor phase was adjusted to 0.4 MPaG by introducing water vapor of 13 kgf/cm$^2$ and the polymerization was continued for 30 min. Thereafter, the pressure was reduced to atmospheric pressure over 30 min. Then, the pressure was reduced to 80 kPaA and the polymerization was continued for 20 min under stirring. The product was granulated by water cooling under pressure of nitrogen, to obtain 25 kg of nylon MXD 6 having a number average molecular weight of 16000. The measured number of fisheyes was 1110/m$^2$. The results are shown in Table 1.

EXAMPLE 2

In the same manner as in Example 1 except for pressurizing the vapor phase to 0.2 MPaG by water vapor, 25 kg of nylon MXD 6 having a number average molecular weight of 16000 was obtained. The measured number of fisheyes was 1230/m$^2$. The results are shown in Table 1.

EXAMPLE 3

In the same manner as in Example 1 except for pressurizing the vapor phase to 0.4 MPaG by water vapor and thereafter continuing the polymerization for 10 min, 25 kg of nylon MXD6 having a number average molecular weight of 15700 was obtained. The measured number of fisheyes was 1560/m$^2$. The results are shown in Table 2.

EXAMPLE 4

In the same manner as in Example 1 except for changing the amount of the remaining polyamide from the previous batch production to 1250 g (5% by weight of the amount of polyamide to be produced), the amount of adipic acid to 14.1 kg and the amount of MXDA to 13.1 kg, 25 kg of nylon MXD 6 having a number average molecular weight of 16100 was obtained. The measured number of fisheyes was 1070/m$^2$. The results are shown in Table 2.

EXAMPLE 5

In the same manner as in Example 1 except for changing the amount of the remaining polyamide from the previous batch production to 75 g (0.3% by weight of the amount of polyamide to be produced), the amount of adipic acid to 14.8 kg and the amount of MXDA to 13.7 kg, 25 kg of nylon MXD 6 having a number average molecular weight of 16200 was obtained. The measured number of fisheyes was 1150/m$^2$. The results are shown in Table 2.

COMPARATIVE EXAMPLE 1

The procedure of Example 1 was repeated up to the addition of MXDA. After the addition of MXDA, the polymerization was continued at atmospheric pressure for 30 min. Thereafter, the pressure was reduced to 80 kPaA and the mixture was stirred for 20 min. The product was granulated by water cooling under pressure of nitrogen, to obtain 25 kg of nylon MXD 6 having a number average molecular weight of 16200. The measured number of fisheyes was 3350/m$^2$. The results are shown in Table 1.

COMPARATIVE EXAMPLE 2

In the same manner as in Example 1 except for pressurizing the vapor phase to 0.1 MPaG by water vapor, 25 kg of nylon MXD 6 having a number average molecular weight of 15800 was obtained. The measured number of fisheyes was 2190/m$^2$. The results are shown in Table 1.

COMPARATIVE EXAMPLE 3

In the same manner as in Comparative Example 1 except for changing the amount of the remaining polyamide from the previous batch production to 75 g (0.3% by weight of the amount of polyamide to be produced), the amount of adipic acid to 14.8 kg and the amount of MXDA to 13.7 kg, 25 kg of nylon MXD 6 having a number average molecular weight of 15800 was obtained. The measured number of fisheyes was 2100/m$^2$. The results are shown in Table 2.

As seen from Tables 1 and 2, the number of fisheyes in molded articles of polyamide is reduced even if the polyamide is produced in the presence of the remaining polyamide in an amount of 0.3% by weight or more of the amount of polyamide to be produced, when the melt polymerization is continued at a temperature equal to or higher than the melting point of polyamide being produced for at least 10 min while maintaining the pressure of the vapor phase in the batch reactor at higher than 0.1 MPaG by introducing water vapor.

Table 1

|  | Examples | | Comparative Examples | |
|---|---|---|---|---|
|  | 1 | 2 | 1 | 2 |
| Amount of remaining polyamide (wt %) | 1 | 1 | 1 | 1 |
| Continued polymerization |  |  |  |  |
| temperature (°C) | 245 | 245 | 245 | 245 |
| pressure (MPaG) | 0.4 | 0.2 | atmospheric pressure | 0.1 |
| time (min) | 30 | 30 | 30 | 30 |
| Time taken to reduce pressure to atmospheric pressure (min) | 30 | 30 | - | 30 |
| Stirring at 80 kPaA (min) | 20 | 20 | 20 | 20 |
| Number average molecular weight | 16000 | 16000 | 16200 | 15800 |
| Yellowness Index (YI) | -11 | -13 | -12 | -12 |
| Number of fisheyes per 1 m$^2$ | 1110 | 1230 | 3350 | 2190 |

Table 2

|  | Examples | | | Comparative Example |
|---|---|---|---|---|
|  | 3 | 4 | 5 | 3 |
| Amount of remaining polyamide (wt %) | 1 | 5 | 0.3 | 0.3 |
| Continued polymerization |  |  |  |  |
| temperature (°C) | 245 | 245 | 245 | 245 |
| pressure (MPaG) | 0.4 | 0.4 | 0.4 | atmospheric pressure |
| time (min) | 10 | 30 | 30 | 30 |
| Time taken to reduce pressure to atmospheric pressure (min) | 30 | 30 | 30 | - |

(continued)

|  | Examples | | | Comparative Example |
|---|---|---|---|---|
|  | 3 | 4 | 5 | 3 |
| Stirring at 80 kPaA (min) | 20 | 20 | 20 | 20 |
| Number average molecular weight | 15700 | 16100 | 16200 | 15800 |
| Yellowness Index (YI) | -12 | -12 | -11 | -12 |
| Number of fisheyes per 1 m$^2$ | 1560 | 1070 | 1150 | 2100 |

The polyamide produced by the method of the present invention is hardly affected by gels and made into molded articles having little fisheyes. The polyamide is useful as molding materials and suitably used in the production of bottles, sheets, films, fibers, etc.

**Claims**

1.  A method of producing polyamide by a direct melt polymerization of a dicarboxylic acid component and a diamine component in the absence of a solvent in a repeated batch manner, which comprises:

    (1) a step of feeding a solid or molten dicarboxylic acid component into a batch reactor and keeping a molten state of the dicarboxylic acid component therein;
    (2) a step of adding the diamine component comprising 70 mol% or more of xylylenediamine continuously or intermittently to the dicarboxylic acid component kept in the molten state in the batch reactor;
    (3) a step of introducing water vapor into the batch reactor after completing the addition of the diamine component; and
    (4) a step of maintaining the pressure of the vapor phase in the batch reactor at a pressure higher than 0.1 MPaG, and continuing the melt polymerization after pressurizing the vapor phase in the batch reactor by introducing water vapor, at a temperature equal to or higher than the melting point of polyamide being produced and for at least 10 minutes,

    wherein the dicarboxylic acid component for the next batch production is supplied to the batch reactor in the presence of a remaining polyamide that is produced in a previous batch production, and
    wherein the amount of the remaining polyamide is 0.3 % by weight or more of the total amount of the remaining polyamide and the theoretical yield of polyamide calculated from amounts of a dicarboxylic acid component and a diamine component which are supplied to the batch reactor for the next batch production.

2.  The method according to claim 1, wherein 70 mol% or more of the xylylenediamine is m-xylylenediamine.

3.  The method according to claim 1, wherein 70 mol% or more of the dicarboxylic acid component is adipic acid.

4.  The method according to claim 1, wherein the water vapor is introduced into the batch reactor after filtration through a metal filter.

5.  The method according to claim 1, wherein the batch reactor is equipped with a partial condenser and a heating surface of the partial condenser is kept in the step (4) at a temperature equal to or lower than the saturated water vapor temperature at the pressure in the step (4).

6.  The method according to claim 1, further comprising a step of solid-state polymerizing polyamide that is recovered after the step (4).

7.  The method according to claim 1, further comprising a step of supplying polyamide which is recovered after the step (4) to a continuous reactor in a molten state and allowing the melt polymerization to further proceed.

**Patentansprüche**

1. Verfahren zur Herstellung von Polyamid durch widerholt chargenweise, direkte Schmelzpolymerisation einer Dicarbonsäure-Komponente und einer Diamin-Komponente in Abwesenheit eines Lösemittels, welches:

(1) einen Schritt des Zuführens einer festen oder geschmolzenen Dicarbonsäure-Komponente in einen Chargenreaktor und das Aufrechterhalten des geschmolzenen Zustands der Dicarbonsäure-Komponente darin;
(2) einen Schritt des kontinuierlichen oder diskontinuierlichen Hinzufügens der Diamin-Komponente, welche 70 Mol% oder mehr Xylylendiamin enthält, zur Dicarbonsäure-Komponente, die im Chargenreaktor im geschmolzenen Zustand gehalten wird;
(3) einen Schritt des Einführens von Wasserdampf in den Chargenreaktor nach Abschluss des Hinzufügens der Diamin-Komponente; und
(4) einen Schritt des Aufrechterhaltens des Drucks der Dampfphase in dem Chargenreaktor bei einem Druck von mehr als 0,1 MPaG und das Fortsetzen der Schmelzpolymerisation bei einer Temperatur gleich oder höher als der Schmelzpunkt des hergestellten Polyamids und für mindestens 10 Minuten nach dem Unterdrucksetzen der Dampfphase im Chargenreaktor durch Einführen von Wasserdampf umfasst,

wobei die Dicarbonsäure-Komponente für die nächste Chargenherstellung dem Chargenreaktor in Anwesenheit des restlichen Polyamids, welches in der vorherigen Chargenherstellung hergestellt wurde, zugeführt wird, und wobei die Menge an restlichem Polyamid 0,3 Gew.-% oder mehr des Gesamtgewichts des restlichen Polyamids und der theoretischen Ausbeute an Polyamid ist, die sich aus den Mengen an Dicarbonsäure-Komponente und Diamin-Komponente, die dem Chargenreaktor für die nächste Chargenherstellung zugeführt werden, errechnet.

2. Das Verfahren nach Anspruch 1, wobei 70 Mol% oder mehr des Xylylendiamins m-Xylylendiamin sind.

3. Das Verfahren nach Anspruch 1, wobei 70 Mol% oder mehr der Dicarbonsäure-Komponente Adipinsäure ist.

4. Das Verfahren nach Anspruch 1, wobei der Wasserdampf in den Chargenreaktor nach Filtration durch einen Metallfilter eingeführt wird.

5. Das Verfahren nach Anspruch 1, wobei der Chargenreaktor mit einem Teilkondensator ausgestattet ist und eine Heizoberfläche des Teilkondensators in Schritt (4) bei einer Temperatur, die bei dem Druck in Schritt (4) gleich oder geringer ist als die Temperatur des gesättigten Wasserdampfes, gehalten wird.

6. Das Verfahren nach Anspruch 1, welches zusätzlich einen Schritt des Festphasenpolymerisierens von Polyamid, welches nach dem Schritt (4) gewonnen wird, umfasst.

7. Das Verfahren nach Anspruch 1, welches zusätzlich einen Schritt des Zuführens des Polyamids, welches nach dem Schritt (4) gewonnen wird, zu einem kontinuierlichen Reaktor im geschmolzenen Zustand und Zulassen, dass die Schmelzpolymerisation weiter fortgesetzt wird, umfasst.

**Revendications**

1. Procédé de production de polyamide par une polymérisation par fusion directe d'un composant acide dicarboxylique et d'un composant diamine en l'absence d'un solvant selon un mode discontinu répété, qui comprend :

(1) une étape consistant à amener un composant acide dicarboxylique solide ou fondu dans un réacteur discontinu et à maintenir un état fondu du composant acide dicarboxylique dans celui-ci ;
(2) une étape consistant à ajouter le composant diamine comprenant 70% en moles ou plus de xylylènediamine de manière continue ou intermittente au composant acide dicarboxylique maintenu à l'état fondu dans le réacteur discontinu ;
(3) une étape consistant à introduire de la vapeur d'eau dans le réacteur discontinu après achèvement de l'ajout du composant diamine ; et
(4) une étape consistant à maintenir la pression de la phase vapeur dans le réacteur discontinu à une pression supérieure à 0,1 MPaG, et à poursuivre la polymérisation par fusion après pressurisation de la phase vapeur dans le réacteur discontinu en introduisant de la vapeur d'eau, à une température supérieure ou égale au point de fusion du polyamide qui est produit et pendant au moins 10 minutes,

où le composant acide dicarboxylique pour la production discontinue suivante est fourni au réacteur discontinu en présence d'un polyamide restant qui est produit dans une production discontinue précédente, et

où la quantité du polyamide restant représente 0,3% en poids ou plus de la quantité totale du polyamide restant et du rendement théorique de polyamide calculé à partir de quantités d'un composant acide dicarboxylique et d'un composant diamine qui sont fournis au réacteur discontinu pour la production discontinue suivante.

2. Procédé selon la revendication 1, dans lequel 70% en moles ou plus de la xylylènediamine sont de la m-xylylènediamine.

3. Procédé selon la revendication 1, dans lequel 70% en moles ou plus du composant acide dicarboxylique sont de l'acide adipique.

4. Procédé selon la revendication 1, dans lequel la vapeur d'eau est introduite dans le réacteur discontinu après filtration à travers un filtre métallique.

5. Procédé selon la revendication 1, dans lequel le réacteur discontinu est équipé d'un condenseur partiel et une surface chauffante du condenseur partiel est maintenue dans l'étape (4) à une température inférieure ou égale à la température de vapeur d'eau saturée à la pression dans l'étape (4).

6. Procédé selon la revendication 1, comprenant en outre une étape consistant à polymériser à l'état solide le polyamide qui est récupéré après l'étape (4).

7. Procédé selon la revendication 1, comprenant en outre une étape consistant à fournir le polyamide qui est récupéré après l'étape (4) à un réacteur continu à l'état fondu et à laisser se poursuivre la polymérisation par fusion.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57200420 A
- JP 9095532 A
- JP 2001329062 A
- US 20020132964 A1

**Non-patent literature cited in the description**

- **TSUKAMOTO et al.** *Kobunshi Kagaku,* July 1973, vol. 30 (339), 419
- Dirt Estimation Chart. Japan Mint